# EUROPEAN PATENT APPLICATION

(11) **EP 4 421 960 A1**
(43) Date of publication of application: **28.08.2024**
(21) Application number: 22883313.3
(22) Date of filing: 29.09.2022
(51) Int. Cl.: H01M 50/262, H01M 50/213, H01M 50/24, H01M 50/284

(54) **POWER SOURCE DEVICE AND METHOD FOR MANUFACTURING SAME**

(30) Priority: 21.10.2021 JP 2021172414
(71) Applicant: Panasonic Energy Co., Ltd., Osaka 570-8511 (JP)
(72) Inventor: MATSUSHITA, Fumiya, Kadoma-shi, Osaka 571-0057 (JP); MATSUBARA, Shota, Kadoma-shi, Osaka 571-0057 (JP)
(74) Representative: Novagraaf International SA
(86) International application number: PCT/JP2022/036350
(87) International publication number: WO 2023/068005

(57) **Abstract**

A power source device includes battery blocks each of which has holder through-holes therein, shafts inserted in the holder through-holes of each battery block, respectively, such that the holder through-holes in each battery block are aligned to holder through-holes in another battery block of the battery blocks connected to one another in a connecting direction, an outer case accommodating the battery blocks therein, the outer case having a tubular shape with both ends opening, a first lid closing a first open end of the outer case, and a second lid closing a second open end of the outer case. The shafts have screw threads at least at respective tips thereof. The first lid is fixed with the screw threads of the plurality of shafts such that the plurality of shafts are inserted in the plurality of holder through-holes of the each of the plurality of battery blocks, respectively, in a core block including the battery blocks connected in the connecting direction.

## Description

### TECHNICAL FIELD

The present disclosure relates to a power source device including battery cells and a method for manufacturing the power source device.

### BACKGROUND ART

A power source device including battery cells connected in series or parallel is employed as a driving power source for a mobile object, such as a power-assisted bicycle, an electric cart, and an electric scooter; a power tool, a vacuum cleaner, and so on. This type of power source device often has a structure of connecting battery blocks each including battery cells connected in series or parallel (PTL 1).

A method for connecting the battery blocks is to fix a core block by fastening a shaft and a nut. However, this method requires a time-consuming work of mounting the shaft onto the nut.

Another method is to fix the battery blocks to each other by direct screwing. However, this method also has a problem of an increase in work man-hours corresponding to the number of battery blocks.

### CITATION LIST

### Patent Literature

PTL 1: Japanese Patent Laid-Open Publication No. 2011-134540

### SUMMARY OF THE INVENTION

An object of the present disclosure is to provide a power source device and a method for manufacturing the power source device that facilitate connection of battery blocks and fixing of the battery blocks onto an outer case.

To achieve the above object, a power source device according to an aspect of the present disclosure includes: battery blocks each including battery cells connected in series or parallel to one another, each of the battery blocks having holder through-holes therein; shafts inserted in the holder through-holes of the each of the battery blocks, respectively, such that the holder through-holes in the each of the battery blocks are aligned to the holder through-holes in another battery block of the battery blocks connected to one another in a connecting direction; an outer case accommodating the battery blocks therein, the outer case having a tubular shape with both ends opening to have a first open end and a second open end; a first lid closing the first open end of the outer case; and a second lid closing the second open end of the outer case. The shafts have screw threads at least at respective tips thereof. The battery blocks connected in the connecting direction constitutes a core block. The first lid is fixed with the screw threads of the shafts such that the shafts are inserted in the holder through-holes of the each of the battery blocks in the core block, respectively.

In a method for manufacturing a power source device according to another aspect, battery blocks each of which includes battery cells connected in series or parallel to one another is prepared. A core block is formed by inserting of shafts in holder through-holes, respectively, such that the holder though-holes opening in the each of the battery blocks are aligned with the holder though-holes of another battery block of the battery blocks connected to one another in a connecting direction, and by screwing and fixing screw threads provided at least at respective tips of the shafts to a first lid provided on an end surface of the core block. An outer case having both ends opening to have a first open end and a second open end is prepared. The core block is inserted from the first open end on one end of the outer case. The second open end of the outer case is closed with a second lid.

In the power source device and the method for manufacturing the power source device according to the aspect, the core block is fixed onto the first lid with the shafts passing through the core block in which the battery blocks are connected. Accordingly, time needed for fixing each of the battery blocks individually can be saved. In addition, the core block housed in the outer case can be stably fixed. Stable fixing of the core block inside the outer case prevents a breakage of or damage to internal components even when an external force such as dropping or vibration is applied to the power source device.

### BRIEF DESCRIPTION OF DRAWINGS

FIG. 1 is a perspective view of a power source device according to Exemplary Embodiment 1 of the present disclosure.
FIG. 2 is an exploded perspective view of the power source device shown in FIG. 1.
FIG. 3 is an exploded perspective view of the power source device in FIG. 2 viewed from the back.
FIG. 4 is an exploded perspective view of a core block shown in FIG. 2.
FIG. 5 is an exploded perspective view of the core block shown in FIG. 4.
FIG. 6 is an exploded perspective view of a battery block shown in FIG. 5.
FIG. 7 is a vertical sectional view of the power source device taken along line VII-VII shown in FIG. 1.
FIG. 8 is a schematic horizontal sectional view of the power source device according to Embodiment 1 of the disclosure.
FIG. 9 is a horizontal sectional view of the power source device taken along line IX-IX shown in FIG. 1.
FIG. 10 is a horizontal sectional view with an enlarged sectional view of a main part along line X - X of the power source device taken along line X-X shown in FIG. 1.
FIG. 11 is a perspective view with an enlarged sectional view of a main part of a first seal shown in FIG. 4.
FIG. 12 is a front view of a second seal shown in FIG. 3.
FIG. 13 is a schematic horizontal sectional view of a power source device according to Exemplary Embodiment 2 of the present disclosure.

### DESCRIPTION OF EMBODIMENT

Exemplary embodiments of the present disclosure may be specified by the following structure and characteristic.

In a power source device according to another aspect of the present disclosure, in any of the above aspects, insert nuts are embedded in the first lid. The insert nuts are engaged with the screw threads of the shafts such that the shafts are inserted in the holder through-holes in the core block, respectively. This structure securely connects the tip to the first lid with the insert nut also for a long shaft, and thus stable connection of the battery blocks is achieved.

A power source device according to still another aspect of the present disclosure, in any of the above aspects, further includes first screws fixing the first lid to the first open end of the outer case such that the core block to which the first lid is fixed with the shafts is inserted in the outer case from the first open end. The outer case has first threaded holes therein at an end rim of the first open end, and the first screws are screwed to the first threaded holes, respectively. This structure advantageously securely fixes the core block to the outer case via the first lid.

A power source device according to still another aspect of the present disclosure, in any of the above aspects, further includes a first seal provided at an interface between the first lid and the outer case. The first seal is disposed closer to an inner surface of the outer case than the plurality of first threaded holes when viewed from the first open end. This structure waterproofs the inside of the outer case with the first seal tightly contacting the interface between the first lid and the outer case while the first lid is fixed onto the outer case with the first screws.

In a power source device according to still another aspect of the present disclosure, in any of the above aspects, the first screws are disposed on an outer side of the shafts when viewed from an end surface of the outer case. This structure waterproofs by closing the first open end of the outer case with the first screws via the first seal while the core block inside the outer case is fixed by the shafts.

A power source device according to still another aspect of the present disclosure, in any of the above aspects, further includes second screws fixing the second lid pressing the core block onto the second open end of the outer case such that the core block to which the first lid is fixed with the shafts is inserted in the outer case from the first open end. The outer case has second threaded holes at an end rim of the second open end, and the second screws are screwed to the second threaded holes, respectively. This structure efficiently performs an assembly process since the core block onto which the first lid is fixed is inserted in the outer case and fixed onto the second lid.

A power source device according to still another aspect of the present disclosure, in any of the above aspects, further includes a second seal provided at an interface between the second lid and the outer case. The second seal is disposed on an inner side of the second threaded holes in the outer case when viewed from the second open end. This structure waterproofs the inside of the outer case with the second seal tightly contacting the interface between the second lid and the outer case while that the second lid is fixed onto the outer case by the second screws.

In a power source device according to still another aspect of the present disclosure, in any of the above aspects, the second seal includes a protrusion protruding in the connecting direction toward an interface between the outer case and the second seal. This structure allows a gap filled with the protrusion with elastic deformation when the second lid is fixed onto the outer case with the second screw.

In a power source device according to still another aspect of the present disclosure, in any of the above aspects, the second screws are arranged on the outer side of the shafts when viewed from the end face of the outer case. This structure waterproofs with the second open end of the outer case closed with the second screws via the second seal while the core block inside the outer case is fixed with the shafts.

A power source device according to still another aspect of the present disclosure, in any of the above aspects, further includes: a board holder disposed on one end surface of the core block in which the battery blocks is connected, the one end face facing the second lid; and a circuit board held by the board holder. The board holder has holder insertion holes therein into which the shafts are inserted, respectively. The shafts include screw heads on respective opposite sides of the screw threads. The shafts are inserted from the holder insertion holes of the board holder, respectively. The screw heads are placed and fixed to the board holder. In other words, the shafts have the screw heads on respective opposite sides of the screw threads. A distance between the board holder and each of the screw heads is shorter than a distance between the board holder and each of the screw threads.

A power source device according to still another aspect of the present disclosure, in any of the above aspects, further includes a side elastic body disposed between a side surface of the core block and an inner surface of the outer case, the side elastic body extending in the connecting direction. This structure suppresses a damage even when the core block inside the outer case collides with an inner wall of the outer case due to an impact applied to the side surface of the power source device.

In a power source device according to still another aspect of the present disclosure, in any of the above aspects, the side elastic body includes a narrow portion having locally narrowed width in the connecting direction. This structure has an advantage of facilitating a work of press-fitting the core block into the outer case by partially reducing a pressure at the narrow portion.

Exemplary embodiments of the present disclosure will be described below with reference to the drawings. Note that the following exemplary embodiments are merely examples for embodying a technical concept of the present invention, and thus the present invention is not limited to the following exemplary embodiments. Still more, the present specification does not intend to limit components described in the scope of appended claims to those described in the exemplary embodiments. In particular, unless otherwise specifically described, dimensions, materials, shapes, and their relative arrangements described in the exemplary embodiments are merely examples and not intended to limit the scope of the present invention. Still more, sizes and positional relationship of components in the drawings may be exaggerated for clear recognition. Still more, same names and reference marks in the following description denote the same or equivalent components to omit detailed description where appropriate. Furthermore, a plurality of elements configuring the present disclosure may be achieved by one component to serve as the plurality of elements, or a function of one component may be distributed to a plurality of components.

The power source device of the present disclosure increases voltage or capacity by connecting numerous battery cells in series or parallel to offer a driving power source suitable for mobile objects such as power-assisted bicycles, electric bicycles, motor bikes, electric wheelchairs, electric tricycles, and electric carts. Still more, the power source device may also be used as a power source for a range of electric appliances used indoors and outdoors such as electric cleaners and power tools. Furthermore, the power source device may be used for a range of purposes such as a backup power source for server, a power source installed in an electric vehicle, such as a hybrid vehicle and an electric car, to supply power to a running motor, a power source for storing power generated by natural energy, such as solar power generation and wind power generation, or a storage power source for storing midnight power or balancing power load at a power peak. Hereinafter, a battery pack for power-assisted bicycle is given as an example of the power source device according to the exemplary embodiments described below.

### Exemplary Embodiment 1

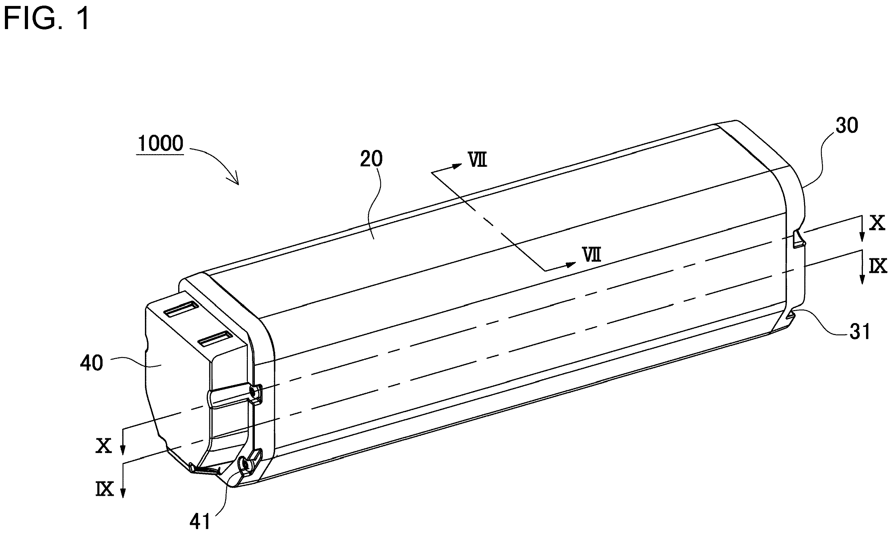

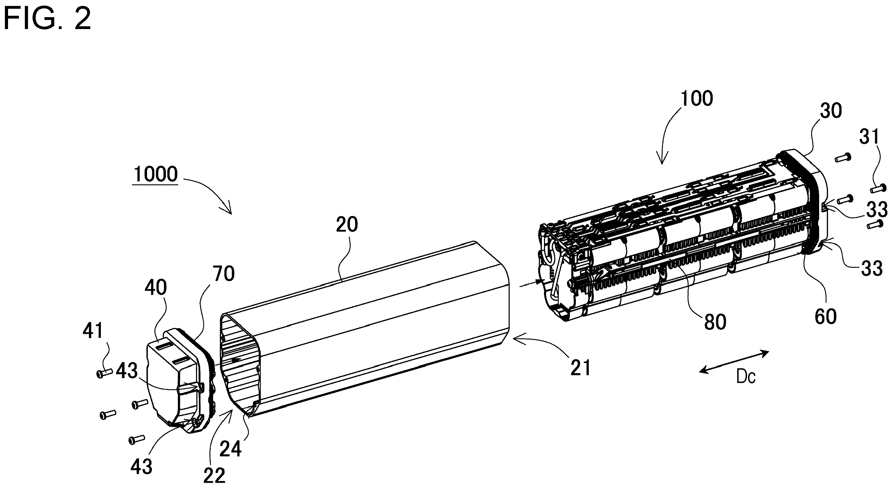

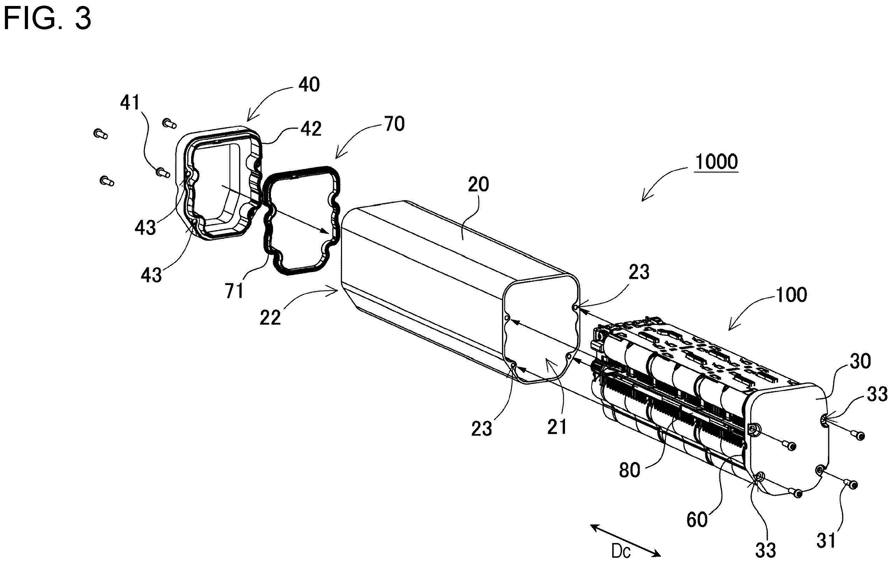

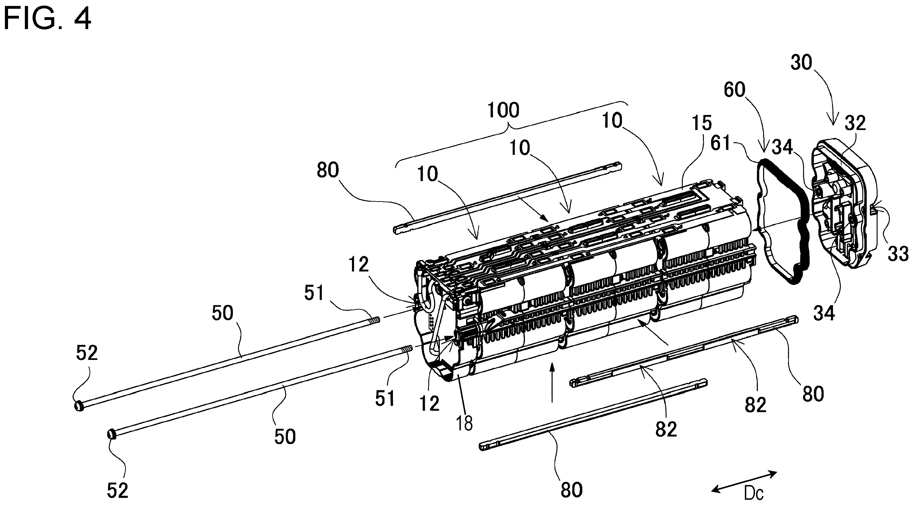

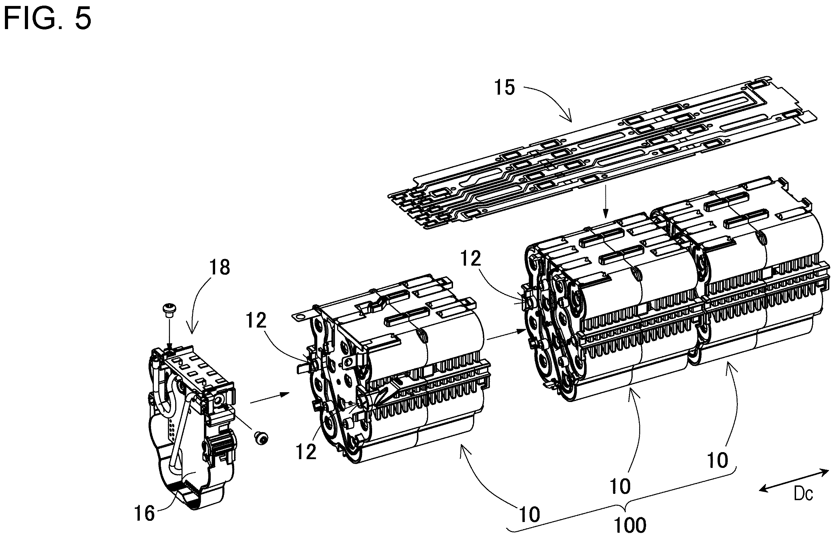

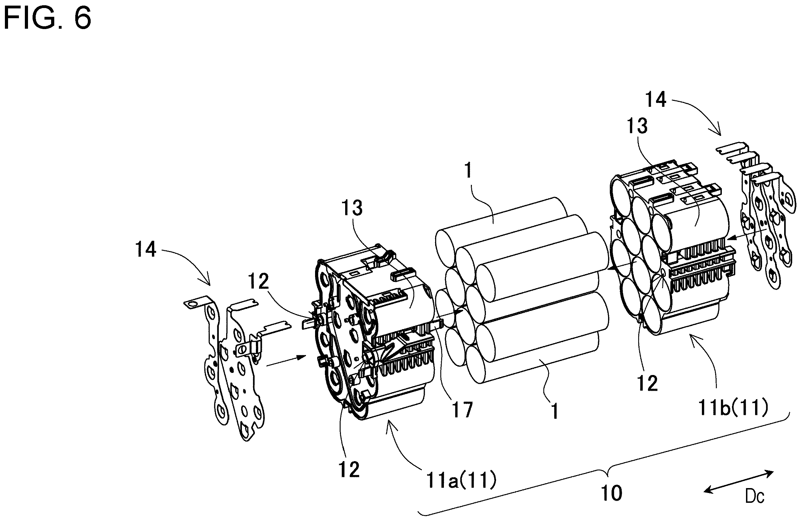

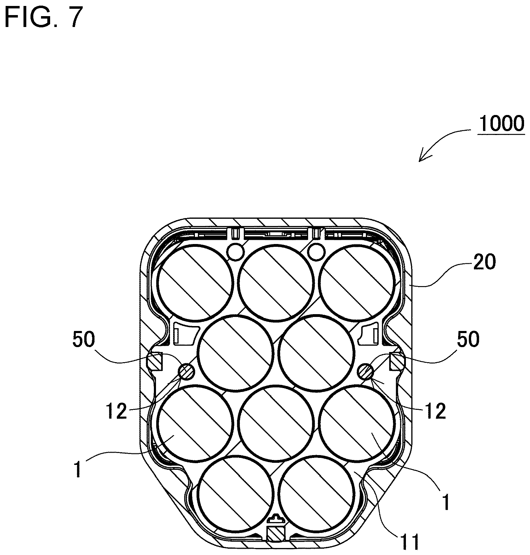

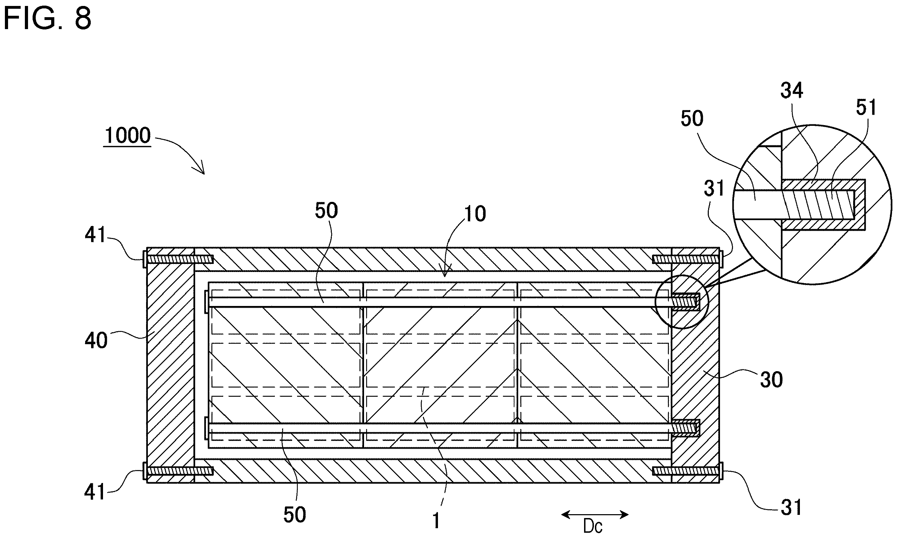

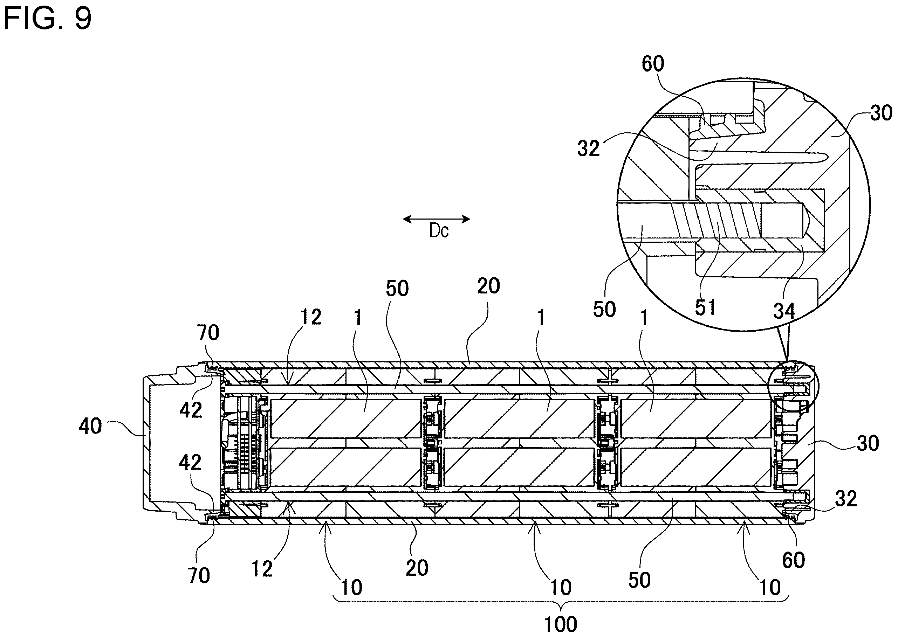

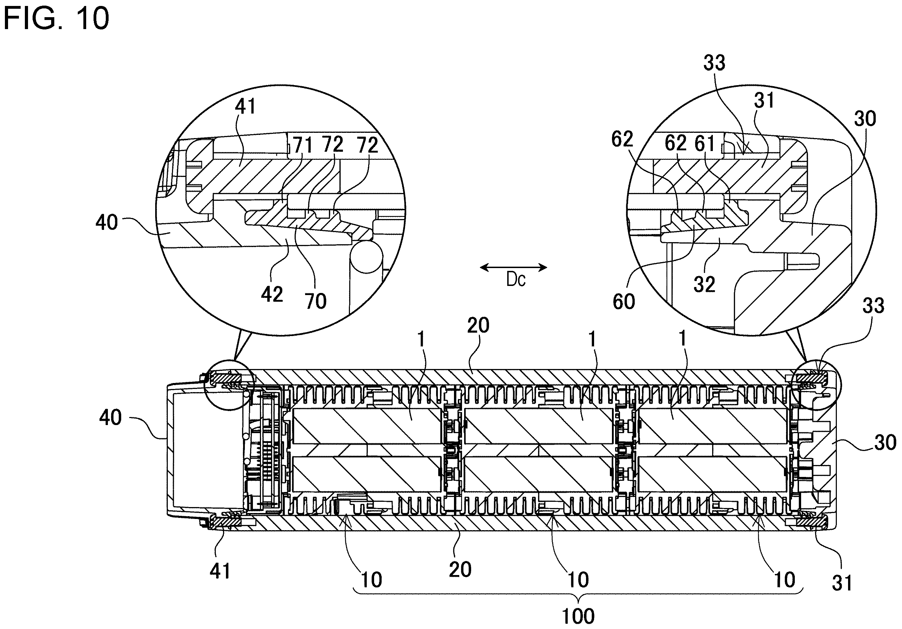

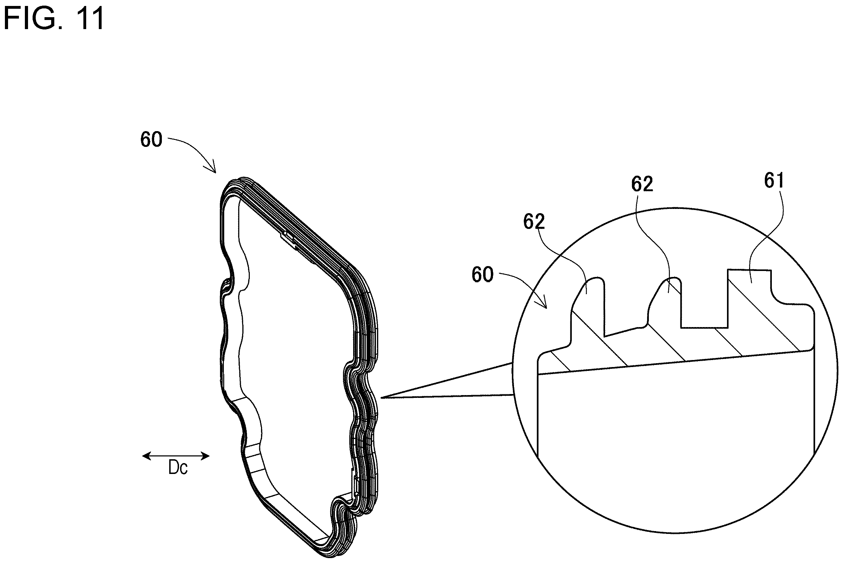

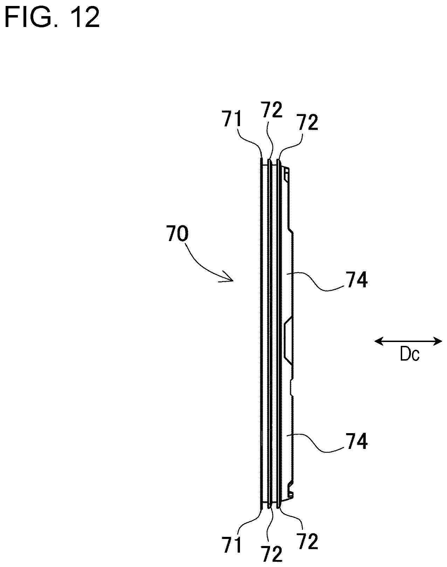

FIGS. 1-12 illustrate power source device 1000 according to Exemplary Embodiment 1 of the present disclosure. FIG. 1 is a perspective view of power source device 1000 according to Embodiment 1 of the present disclosure. FIG. 2 is an exploded perspective view of power source device 1000 shown in FIG. 1. FIG. 3 is an exploded perspective view of power source device 1000 shown in FIG. 2 viewed from the back. FIG. 4 is an exploded perspective view of core block 100 shown in FIG. 2. FIG. 5 is an exploded perspective view of core block 100 shown in FIG. 4. FIG. 6 is an exploded perspective view of battery block 10 shown in FIG. 5. FIG. 7 is a vertical sectional view along line VII-VII of power source device 1000 taken along line VII -VII shown in FIG. 1. FIG. 8 is a schematic horizontal sectional view of power source device 1000 according to Embodiment 1 of the present disclosure. FIG. 9 is a horizontal sectional view of power source device 1000 taken along line IX-IX shown in FIG. 1. FIG. 10 is a horizontal sectional view with an enlarged sectional view of a main part of power source device 1000 along line X-X shown in FIG. 1. FIG. 11 is a perspective view with an enlarged sectional view of a main part of first seal 60 shown in FIG. 4. FIG. 12 is an enlarged plan view of second seal 70 shown in FIG. 3. Power source device 1000 illustrated in these figures includes core block 100, outer case 20, first lid 30, and second lid 40.

Outer case 20 has a rod shape extended in one direction as illustrated in FIG. 1. Outer case 20 is a tubular casing with opening at both ends thereof, and core block 100 illustrated in FIG. 2 and FIG. 3 is inserted in outer case 20. First open end 21 at one and out of open ends of outer case 20 is closed with first lid 30. Second open end 22 on an opposite end of the first open end 21 is closed with second lid 40.

As illustrated in FIGS. 2-5, core block 100 includes battery blocks 10 connected to one another in connecting direction Dc. Battery blocks 10 are stacked on one another and connected to one another with shafts 50. As illustrated in FIG. 6 and FIG. 7, each battery block 10 includes battery holder 11 for holding battery cells 1. Battery holder 11 causes battery cells 1 to be arranged at predetermined positions. Battery cells 1 held in each battery block 10 are connected in series or parallel to one another.

In addition, each battery block 10 has holder through-holes 12 provided therein. As illustrated in FIG. 4, shafts 50 are inserted in holder through-holes 12 that are connected such that holder through-holes 12 are aligned in each of battery blocks 10 connected in one direction. Screw threads 51 are formed on at least at respective tips of shafts 50.

First lid 30 is fixed with screw thread 51 formed at the tip of each shaft 50 such that shafts 50 are inserted in core block 100. In this structure, as illustrated in FIG. 8, core block 100 is fixed onto first lid 30 with shafts 50 that pass through core block 100 in which battery blocks 10 are connected to one another. Thus, time needed for individually fixing each battery block 10 can be saved. The exemplary embodiment has an advantage that core block 100 accommodated in outer case 20 is stably fixed. Stable fixing of core block 100 inside outer case 20 prevents a breakage of or a damage to internal components even when an external force, such as dropping or vibration, is applied to power source device 1000.

A fastening method using an E-ring or push nut has been known as a method of fastening the core block accommodated in the outer case. However, this method requires complicated machining. The battery blocks may be fixed from outside with a screw by forming a hole in the outer case. However, this method also requires a large working man-hours and additional waterproofing. Still more, the core block may be fixed by fastening the shaft and nut. However, this method requires a time-consuming work of mounting the shaft onto the nut. In contrast, in power source device 1000 according to the embodiment, shafts 50 passing through battery blocks 10 connect even first lid 30 as described above. Core block 100 fixed onto first lid 30 is inserted into outer case 20 so that core block 100 is firmly fixed with first lid 30 having a large area. Each component will be detailed below.

### Outer Case 20

Outer case 20 includes, as illustrated in FIGS. 1-3, outer case 20 having a tubular shape with open both ends, first lid 30 closing first open end 21 at one of the open both ends of outer case 20, and second lid 40 closing second open end 22. As illustrated in FIG. 3, core block 100 is inserted into outer case 20 such that first lid 30 is fixed onto core block 100, and first lid 30 is fixed onto outer case 20 by first screws 31. Then, as illustrated in FIG. 2, second lid 40 is fixed onto outer case 20 with second screws 41.

Outer case 20 has a substantially rectangular cross section, and has substantially a rectangular tubular shape with open both ends. Four corners of the rectangular tubular shape of outer case 20 are chamfered to have curved surfaces. Outer case 20 with this shape is a rectangular tubular outer case 20 with curved corners, thus providing preferable appearance and gentle touch.

A cross-section of first lid 30 and second lid 40 has a shape that follows an outer shape of outer case 20 so that first lid 30 and second lid 40 can close first open end 21 and second open end 22 of outer case 20 with good appearance, respectively. First lid 30 and second lid 40 have first step wall 32 and second step wall 42 that are inserted in first open end 21 and second open end 22 of outer case 20, respectively. While first step wall 32 and second step wall 42 are inserted inside of first open end 21 and second open end 22 of outer case 20, respectively, first step wall 32 and second step wall 42 contact inner surfaces of first open end 21 and second open end 22 of outer case 20 to close these first open end 21 and second open end 22, respectively. More specifically, in first lid 30 and second lid 40, outer shapes of first step wall 32 and second step wall 42 are slightly smaller than an inner shape of outer case 20. Outer shapes of first step wall 32 and second step wall 42 are substantially same or slightly larger than the outer shape of outer case 20. First lid 30 and second lid 40 close first open end 21 and second open end 22, respectively, with contact surfaces of first lid 30 and second lid 40 on outer sides of first step wall 32 and second step wall 42 contact first open end 21 and second open end 22 of outer case 20. First step wall 32 and second step wall 42 on first lid 30 and second lid 40 position first lid 30 and second lid 40 and connect first lid 30 and second lid 40 to outer case 20.

As illustrated in FIG. 2 and FIG. 3, ring-like first seal 60 and second seal 70 are provided on outer peripheral surfaces of first step wall 32 and second step wall 42 of first lid 30 and second lid 40. Outer case 20 is connected to first lid 30 and second lid 40 in a sealed structure via ring-like first seal 60 and second seal 70 disposed on the outer peripheral surfaces of first step wall 32 and second step wall 42. As illustrated in FIG. 9 and FIG. 10, first seal 60 and second seal 70 are integrally formed into a shape that consecutively bend from first open end 21 and second open end 22, respectively, to their inner surfaces. First seal 60 having this shape is provided from an interface between first lid 30 and first step wall 32 to an interface between the outer peripheral surface of first step wall 32 and an outer peripheral surface of first open end 21. Second seal 70 having this shape is provided from an interface between second lid 40 and second step wall 42 to an interface between the outer peripheral surface of second step wall 42 and an outer peripheral surface of second open end 22. First seal 60 and second seal 70 are pressed and elastically crushed at these interfaces to maintain a watertight state, thereby providing a stable sealing effect.

A discharge connector for discharging from built-in battery cells and a charge connector for charging built-in battery cells 1 may be provided at second lid 40. A display on the surface for displaying a remaining capacity of power source device 1000 may be provided on first lid 30 or second lid 40. This display indicates, for example, the remaining capacity of the power source device by a lighting state of a light source, such as an LED.

### First Lid 30

First lid 30 is fixed onto outer case 20 with first screws 31, as illustrated in FIG. 10. First lid 30 is fixed onto outer case 20 such that first lid 30 is previously fixed onto core block 100 with shafts 50. As illustrated in FIG. 2 and FIG. 3, core block 100 onto which first lid 30 is fixed is inserted from of first open end 21 of outer case 20. Then, first lid 30 is fixed onto outer case 20 with first screws 31, as illustrated in FIG. 10. First open end 21 of outer case 20 has first threaded hole 23 for screwing first screw 31. First lid 30 has first insertion hole 33 therein for inserting first screw 31. First insertion hole 33 may be a threaded hole. The structure of fixing first lid 30 fixed to core block 100 onto outer case 20 thus fixes core block 100 firmly to outer case 20 via first lid 30. As illustrated in FIG. 2, second lid 40 is fixed onto outer case 20 with second screws 41 while first lid 30 is fixed onto outer case 20.

First screw 31 is disposed on an outer side of shafts 50 when viewed from an end surface of outer case 20. This arrangement provides waterproofing by closing first open end 21 of outer case 20 by first screws 31 via first seal 60 while fixing core block 100 inside outer case 20 by shafts 50.

As illustrated in FIG. 10, first seal 60 is disposed on an inner side of first screw 31 in outer case 20 when viewed from first open end 21. This arrangement waterproofs the inside of outer case 20 with first seal 60 tightly contacting the interface between first lid 30 and outer case 20 while first lid 30 is fixed onto outer case 20 with first screws 31. In other words, waterproofing at a position of first screw 31 is not necessary. The interface is sealed with first seal 60 pressed and deformed by first open end 21 of outer case 20 and first lid 30 so as to prevent water immersion into outer case 20.

FIG. 11 is a perspective view of first seal 60. First seal 60 has an annular shape and is bent to avoid first insertion hole 33 provided in first lid 30. This shape allows first seal 60 to be disposed on the inner side of first screw 31 in outer case 20. Still more, first seal 60 includes first flange 61 protruding outward along the annular shape. As illustrated in an enlarged sectional view of a main part in FIG. 10, first flange 61 is elastically deformed by being sandwiched between first lid 30 and first open end 21 so as to provide waterproofing on the interface between first open end 21 and first lid 30. First seal 60 includes first pleat 62 that is substantially parallel with first flange 61 and has an outer periphery smaller than first flange 61. First pleat 62 protrudes outward from first seal 60 with the annular shape. Plural first pleats 62 parallel to each other may be provided. Pleats 62 protrude from the inner surface of outer case 20 and elastically deform when first seal 60 is press-fitted to first open end 21, as illustrated in FIG. 10. This structure of first seal 60 prevents water following from first open end 21 to the inner surface of outer case 20 from entering inside outer case 20, as illustrated in FIG. 10, even when water immersion beyond first flange 61 is supposed to occur. In other words, pleats 62 enhances the waterproof performance. In particular, double first pleats 62 enhance reliability of waterproof performance. The number of first pleats 62 may be one or three more depending on required waterproof performance. Thermoplastic elastomer (TPE) is suitable for first seal 60.

### Second Lid 40

Outer case 20 onto which first lid 30 is fixed as described above is fixed to second lid 40 with second screws 41. Since second lid 40 is thus fixed in while core block 100 is fixed onto first lid 30 and inserted into outer case 20, an assembly process is efficiently performed. Second open end 22 of outer case 22 has second threaded hole 24 for screwing second screw 41. Second lid 40 has second insertion hole 43 therein for inserting second screw 41. Second insertion hole 43 may be a threaded hole.

Second screw 41 is disposed on the outer side of shafts 50 when viewed from the end surface of outer case 20. This arrangement provides waterproofing by closing second open end 22 of outer case 20 with second screw 41 via second seal 70 while fixing core block 100 inside outer case 20 by shafts 50.

As illustrated in FIG. 2, second seal 70 is interposed between second lid 40 and outer case 20 so as to provide waterproofing on this interface. Second seal 70 is disposed on an inner side of the second threaded hole in outer case 20 when viewed from second open end 22. This arrangement waterproofs the inside of outer case 20 with second seal 70 tightly contacting the interface between second lid 40 and outer case 20 while second lid 40 is fixed onto outer case 20 by second screw 41.

Similarly to first seal 60, second seal 70 includes second flange 71 and second pleat 72. As illustrated in an enlarged sectional view of a main part in FIG. 10, second seal 70 provides waterproofing on this interface by being interposed between second lid 40 and outer case 20 when second lid 40 is fixed by second screw onto outer case 20 to which first lid 30 is fixed.

As illustrated in FIG. 12, second seal 70 includes protrusion 74 protruding in connecting direction Dc of battery blocks 10 toward the interface with outer case 20. In this structure, protrusion 74 elastically deforms and fills a gap when second lid 40 is fixed onto outer case 20 with second screw 41. In particular, the gap tends to be generated due to accumulated tolerance when core block 10 becomes long such as by connecting a battery blocks 10. Therefore, second seal 70 including protrusion 74 protruding in a stacking direction of battery blocks 10, i.e., an extending direction of shafts 50, suppresses generation of the gap due to protrusion 74 elastically deforming when second seal 70 is sandwiched. Thus, a strength of fixing the core block is increased. Similarly to first seal 60, second seal 70 may be made of TPE.

### Shaft 50

Shaft 50 linearly connects battery blocks 10 configuring core block 100. Shaft 50 illustrated in FIG. 4 and FIG. 9 includes screw head 52 at a rear end thereof and screw thread 51 at the tip thereof, and has a total length sufficient for connecting three battery blocks 10. Shaft 50 is preferably made of metal to secure the strength for fastening and connecting battery blocks 10 to one another from both sides. Metal shaft 50 has a large heat capacity and effectively absorbs and transfers heat even when battery cell 1 generates heat. Shaft 50 as described above is inserted in holder through-hole 12 provided in battery holder 11 of each battery block 10 to integrally connect battery blocks 10 linearly arranged.

Insert nut 34 is embedded in first lid 30. Insert nut 34 is engaged with screw thread 51 formed at the tip of each shaft 50 while shafts 50 are inserted in core block 100. This structure securely connects the tip to first lid 30 by insert nut 34 even when shaft 50 is long. As a result, stable connection of battery blocks 10 is achieved. Insert nut 34 is insert-molded in first lid 30.

It is sufficient to provide screw thread 51 only at the tip of shaft 50. However, the screw thread may be formed over an entire length of the shaft. This structure advantageously firmly connects the battery blocks to one another.

### Exemplary Embodiment 2

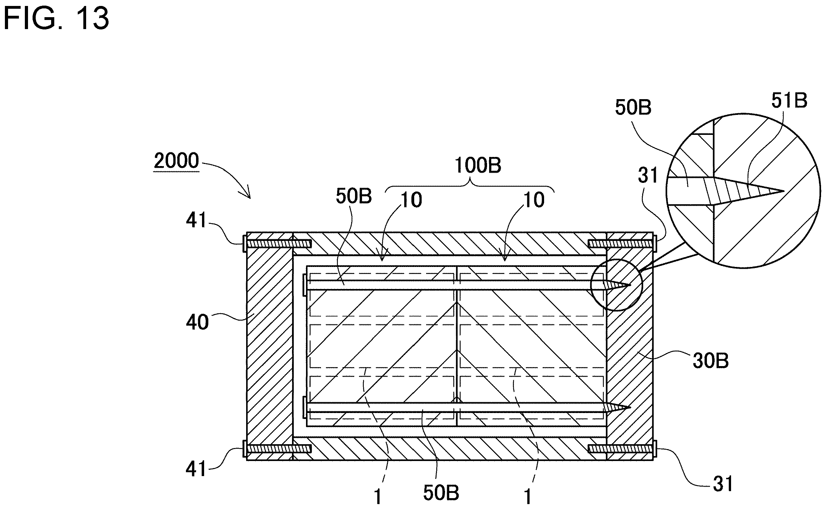

The above example describes an example of embedding insert nut 34 in first lid 30, and insert nut 34 is engaged with screw thread 51 formed at the tip of each shaft 50. This structure stably fixes first lid 30 by using long shaft 50 even when the core block is long due to a lot of battery blocks 10 or battery cells 1. However, the present invention is not limited to this structure. A tapping screw may be formed at the tip of shaft 50 and the tapping screw may be screwed into first lid 30. In particular, when the total length of the core block is relatively short, such as when the number of battery blocks is small, the core block is stably fixed by the tapping screw because shaft 50 with shorter length can be used to reduce fluctuation at the tip. This example is illustrated in a schematic horizontal sectional view in FIG. 13 as power source device 2000 according to Exemplary Embodiment 2. In the power source device illustrated in FIG. 13, components identical to those of Embodiment 1 are denoted by the same reference numerals and their detailed description will be omitted.

In this power source device 2000, core block 100B includes two battery blocks 10. As a result, the total length of shaft 50B is smaller than the device according to Embodiment 1. In addition, a tip of shaft 50B is the tapping screw where screw thread 51B is formed like a wood screw. Short shaft 50B easily positions screw thread 51B at the tip onto first lid 30B. Accordingly, first lid 30 is stably fixed by directly screwing the tapping screw.

### Core Block 100

Core block 100 is accommodated in outer case 20 while battery blocks 10 are stacked on one another in an axial direction of outer case 20. As illustrated in FIG. 2, FIG. 3, FIG. 4, FIG. 5, and FIG. 6, battery blocks 10 each including battery cells 1 arranged in multiple stages and rows in battery holder 11 are stacked on one another lengthwise that is a longer direction of battery cells 1, and linearly connected to one another. In this example, core block 100 includes three battery blocks 10. Core block 100 has a large battery capacity [Ah] by connecting battery cells 1 in parallel to one another, and increases an output voltage [V] by connecting battery cells 1 in series to one another. The power source device of the present disclosure is not limited to three battery blocks 10 that configure the core block, and two or less battery blocks 10 may be included or four or more battery blocks 10 may be included depending on the purpose of use and specifications.

### Battery Block 10

As illustrated in FIG. 6, in each battery block 10, battery holder 11 includes insertion tube 13 for battery cell 1, and battery cell 1 is inserted in insertion tube 13 so as to be disposed battery cells 1 in predetermined positions. In battery block 10, rechargeable battery cells 1 are arranged in multiple stages and rows in battery holder 11.

Each battery cell 1 is a rechargeable cylindrical secondary battery, and a lithium-ion secondary battery is preferably used. However, the present invention does not specify the use of lithium-ion secondary battery for the battery cell. Other rechargeable secondary batteries, such as a nickel-hydrogen battery, a nickel-cadmium battery, and lithium-polymer battery, may be used.

In battery block 10, battery cells 1 are arranged in parallel such that longitudinal directions of battery cells 1 are directed in the same direction. Battery cells 1 that configure battery block 10 are connected in parallel or series to one another for the required number by lead plates 14 connected to end electrodes on both ends of battery cells 1, and connected to circuit board 16 via wiring board 15 as illustrated in FIG. 5. In core block 100, three battery blocks 10 each including ten battery cells 1 are connected to one another. In entire core block 100, thirty battery cells 1 are connected in three parallel and ten series connections. The number of battery cells and a connection may be changed as appropriate in core block 100.

### Battery Holder 11

Battery holder 11 is prepared by molding insulating plastic to have the same shape. Insertion tubes 13 for battery cells 1 and connecting protrusions 17 for connecting shafts 50 are provided by integral molding.

Insertion tube 13 holds battery cell 1 placed in insertion tube 13 at the predetermined position. Battery holder 11 in the drawings has a shape for holding the cylindrical batteries as battery cells 1 by inserting the cylindrical batteries into insertion tubes 13. However, the battery cell is not limited to the cylindrical battery in the present invention. For example, the battery cell may be a rectangular battery. In a power source device using the rectangular battery for the battery cell, the insertion tube of the battery holder has a rectangular tubular shape.

In battery holder 11 illustrated in FIG. 7, ten battery cells 1 are arranged in four vertical stages, and three rows, two rows, three rows, and two rows of battery cells are arranged in respective stages from the top. Battery cells 1 are heaped while alternately deviated in which battery cells 1 are vertically arranged between horizontally adjacent battery cells 1.

As illustrated in FIG. 6, battery holder 11 is split and molded in a pair of cell holders 11a and 11b. Each of cell holders 11a and 11b configuring battery holder 11 includes insertion tubes 13 for inserting battery cells 1 in parallel to each other. Insertion tube 13 has open both ends so that end electrodes of the cylindrical battery inserted in insertion hole 13 are exposed to connect lead plates 14 to the end electrodes. Insertion tubes 13 of cell holders 11a and 11b have a length to insert a half of battery cell 1. In each battery cell 1, a half of battery cell 1 is inserted in one cell holder 11a and remaining half is inserted in the other cell holder 11b to arrange battery cell 1 at the predetermined position in battery holder 11.

Power source device 1000 includes board holder 18 and circuit board 16 held by board holder 18. Board holder 18 is one end surface of core block 100, and arranged on the end surface of core block 100 facing second lid 40. Board holder 18 has holder insertion holes therein into which insert shafts 50 are inserted. Shafts 50 are inserted from the holder insertion holes of board holder 18 and screw heads are positioned on the side of board holder 18, respectively. In other words, shafts 50 are fixed by placing screw heads 52 on board holder 18.

### Circuit Board 16

Core block 100 further includes circuit board 16 connected to battery blocks 10. In core block 100 illustrated in FIG. 5, circuit board 16 is disposed on the end surface of battery blocks 10 linearly connected to one another. Circuit board 16 is arranged at the predetermined position via board holder 18. Lead plates 14 connected to battery cells 1 are connected directly or via wiring board 15 to circuit board 16. Electronic components that configure a protective circuit for controlling charging or discharging of battery cell 1 are mounted on circuit board 16. The protective circuit detects voltage of each battery, and a circuit for shutting off charging or discharging current is also provided. Furthermore, a temperature detection circuit for detecting abnormal temperature of battery cells 1 may be mounted on circuit board 16.

### Side Elastic Body 80

The power source device may further include one or more side elastic bodies 80 between a side surface of core block 100 and an inner surface of outer case 20. Side elastic body 80 suppresses a damage when core block 100 collides with an inner wall of outer case 20 inside outer case 20 due to an impact applied to the side surface of the power source device.

As illustrated in FIG. 4, side elastic body 80 has a rod shape extending in connecting direction Dc of battery block 10. The device may preferably include plural side elastic bodies 80. Side elastic bodies 80 are disposed, for example, between the inner surface of outer case 20 and each of both side surfaces of core block 100. This arrangement protects core block 100 inside outer case 20 from impacts applied to both left and right side surfaces. Side elastic body 80 may be made of rubber material with high elasticity, such as fluororubber, isoprene rubber, styrene butadiene rubber, butadiene rubber, chloroprene rubber, nitrile rubber, hydrogenated nitrile rubber, polyisobutylene rubber, ethylene propylene rubber, ethylene-vinyl acetate copolymer rubber, chlorosulfonated polyethylene rubber, acryl rubber, epichlorohydrin rubber, urethane rubber, silicone rubber, thermoplastic olefin rubber, ethylene propylene diene rubber, butyl rubber, and polyether rubber.

Side elastic body 80 preferably has narrow portion 82 with locally narrowed width provided in connecting direction Dc of battery blocks 10. This structure facilitates a work of press-fitting core block 100 into outer case 20 by partially reducing pressure at narrow portion 82.

### Method for Manufacturing Power Source Device

A method for manufacturing the power source device as configured above will be described. First, holder through-holes 12 opening in each battery block 10 are aligned and battery blocks 10 are connected to one another in one direction. Then, shafts 50 are inserted in holder through-holes 12. Screw thread 51 formed at least at the tip of each shaft 50 is screwed and fixed to first lid 30 arranged on the end surface of core block 100. In this state, core block 100 is inserted from first open end 21 that is one open end of outer case 20 so that first lid 30 may close first open end 21. Then, second open end 22 that is the other open end of outer case 20 is closed by second lid 40. Shafts 50 passing through core block 100 in which battery blocks 10 are connected thus fix core block 100 onto first lid 30. As a result, time for fixing each battery block 10 individually can be saved. Core block 100 accommodated in outer case 20 is stably fixed. Accordingly, stable fixing of core block 100 inside outer case 20 prevents a breakage of or damage to internal components even when an external force such as dropping or vibration is applied to the power source device.

### INDUSTRIAL APPLICABILITY

A power source device and a method for manufacturing the power source device according to the present disclosure are effectively applicable to a power source device installed in power vehicles to supply power to a drive motor, such as a driving power source for power-assisted bicycles, motor bikes, electric wheel chairs, electric tricycles, and electric carts.

### REFERENCE MARKS IN THE DRAWINGS

- 1000, 2000: power source device
- 100, 100B: core block
- 1: battery cell
- 10: battery block
- 11: battery holder
- 11a, 11b: cell holder
- 12: holder through-hole
- 13: insertion tube
- 14: lead plate
- 15: wiring board
- 16: circuit board
- 17: connecting protrusion
- 18: board holder
- 20: outer case
- 21: first open end
- 22: second open end
- 23: first threaded hole
- 24: second threaded hole
- 30, 30B: first lid
- 31: first screw
- 32: first step wall
- 33: first insertion hole
- 34: insert nut
- 40: second lid
- 41: second screw
- 42: second step wall
- 43: second insertion hole
- 50: shaft
- 51, 51B: screw thread
- 52: screw head
- 60: first seal
- 61: first flange
- 62: first pleat
- 70: second seal
- 71: second flange
- 72: second pleat
- 74: protrusion
- 80: side elastic body
- 82: narrowed portion
- Dc: connecting direction

## Claims

1. A power source device comprising:
a plurality of battery blocks each including a plurality of battery cells connected in series or parallel to one another, each of the plurality of battery blocks having a plurality of holder through-holes therein;
a plurality of shafts inserted in the plurality of holder through-holes of the each of the plurality of battery blocks, respectively, such that the plurality of holder through-holes in the each of the plurality of battery blocks are aligned to the plurality of holder through-holes in another battery block of the plurality of battery blocks connected to one another in a connecting direction;
an outer case accommodating the plurality of battery blocks therein, the outer case having a tubular shape with both ends opening to have a first open end and a second open end;
a first lid closing the first open end of the outer case; and
a second lid closing the second open end of the outer case, wherein
the plurality of shafts have screw threads at least at respective tips thereof,
the plurality of battery blocks connected in the connecting direction constitutes a core block, and
the first lid is fixed with the screw threads of the plurality of shafts such that the plurality of shafts are inserted in the plurality of holder through-holes of the each of the plurality of battery blocks in the core block, respectively.

2. The power source device of claim 1, further comprising
a plurality of insert nuts embedded in the first lid, wherein
the plurality of insert nuts are engaged with the screw threads of the plurality of shafts such that the plurality of shafts are inserted in the plurality of holder through-holes in the core block, respectively.

3. The power source device of claim 1 or 2, further comprising
a plurality of first screws fixing the first lid to the first open end of the outer case such that the core block to which the first lid is fixed with the plurality of shafts is inserted in the outer case from the first open end, wherein
the outer case has a plurality of first threaded holes therein at an end rim of the first open end, and the plurality of first screws are screwed to the plurality of first threaded holes, respectively.

4. The power source device of claim 3, further comprising
a first seal provided at an interface between the first lid and the outer case, wherein
the first seal is disposed closer to an inner surface of the outer case than the plurality of first threaded holes when viewed from the first open end.

5. The power source device of claim 4, wherein the plurality of first screws are disposed on an outer side of the plurality of shafts when viewed from an end surface of the outer case.

6. The power source device of any one of claims 1 to 5, further comprising
a plurality of second screws fixing the second lid pressing the core block onto the second open end of the outer case such that the core block to which the first lid is fixed with the plurality of shafts is inserted in the outer case from the first open end, wherein
the outer case has a plurality of second threaded holes at an end rim of the second open end, and the plurality of second screws are screwed to the plurality of second threaded holes, respectively.

7. The power source device of claim 6, further comprising a second seal provided at an interface between the second lid and the outer case, wherein
the second seal is disposed on an inner side of the plurality of second threaded holes in the outer case when viewed from the second open end.

8. The power source device of claim 7, wherein the second seal includes a protrusion protruding in the connecting direction toward an interface between the outer case and the second seal.

9. The power source device of claim 7 or 8, wherein the plurality of second screws are arranged on the outer side of the plurality of shafts when viewed from the end face of the outer case.

10. The power source device of any one of claims 1 to 9, further comprising:
a board holder disposed on one end surface of the core block in which the plurality of battery blocks is connected, the one end face facing the second lid; and
a circuit board held by the board holder, wherein
the board holder has a plurality of holder insertion holes therein into which the plurality of shafts are inserted, respectively,
the plurality of shafts includes screw heads on respective opposite sides of the screw threads,
the plurality of shafts are inserted from the plurality of holder insertion holes of the board holder, respectively, and
the screw heads are placed and fixed to the board holder.

11. The power source device of any one of claims 1 to 10, further comprising
a side elastic body disposed between a side surface of the core block and an inner surface of the outer case, the side elastic body extending in the connecting direction.

12. The power source device of claim 11, wherein the side elastic body includes a narrow portion having locally narrowed width in the connecting direction.

13. A method for manufacturing a power source device, comprising:
preparing a plurality of battery blocks each of the plurality of battery blocks including a plurality of battery cells connected in series or parallel to one another;
forming a core block by inserting a plurality of shafts in a plurality of holder through-holes, respectively, such that the plurality of holder though-holes opening in the each of the plurality of battery blocks are aligned with the plurality of holder though-holes of another battery block of the plurality of battery blocks connected to one another in a connecting direction, and by screwing and fixing screw threads provided at least at respective tips of the plurality of shafts to a first lid provided on an end surface of the core block;
preparing an outer case having both ends opening to have a first open end and a second open end;
inserting the core block from the first open end on one end of the outer case; and
closing the second open end of the outer case with a second lid.
